(19) Europäisches Patentamt
European Patent Office
Office européen des brevets

(11) Publication number: 0 269 570 A2

# (12) EUROPEAN PATENT APPLICATION

(21) Application number: 87810675.6

(22) Date of filing: 18.11.87

(51) Int. Cl.[4]: C 08 K 5/32
C 10 L 1/22, C 10 M 133/36

(30) Priority: 24.11.86 US 934300

(43) Date of publication of application:
01.06.88 Bulletin 88/22

(84) Designated Contracting States: DE FR GB IT

(71) Applicant: CIBA-GEIGY AG
Klybeckstrasse 141
CH-4002 Basel (CH)

(72) Inventor: Ravichandran, Ramanathan
111 DeHaven Drive Apt. 125
Yonkers N.Y. 10703 (US)

Snead, Thomas E.
39 King Street
Dobbs Ferry, N.Y. 10522 (US)

## (54) Compositions stabilized with N-hydroxyiminodiacetic or dipropionic acids or esters thereof.

(57) A composition of matter comprising a polymer, resin, mineral fluid or synthetic fluid subject to oxidative, thermal and actinic degradation and at least a compound of formula (I)

$$R_1O-\overset{O}{\overset{\|}{C}}-(CH_2)_n-\overset{OH}{\overset{|}{N}}-(CH_2)_n-\overset{O}{\overset{\|}{C}}-OR_2 \qquad (I)$$

wherein $R_1$ and $R_2$ are independently hydrogen, alkyl of 4,8 or 14 to 36 carbon atoms, cycloalkyl of 5 to 12 carbon atoms, phenyl, phenyl substituted by alkyl of 1 to 12 carbon atoms, aralkyl of 7 to 9 carbon atoms or said aralkyl substituted by alkyl of 1 to 12 carbon atoms; and n is 1 or 2.

EP 0 269 570 A2

## Description

Compositions stabilized with N-hydroxyiminodiacetic or dipropionic acids or esters thereof

The present invention relates to compositions stabilized with N-hydroxyiminodiacetic or dipropionic acids or esters thereof and to the use of said acids or esters for stabilizing polymers, resins, mineral fluids or synthetic fluids against oxidative, thermal and actinic degradation.

Organic polymeric materials such as plastics and resins are subject to thermal, oxidative and photodegradation. A great variety of stabilizers are known in the art for stabilizing a diversity of substrates. Their effectiveness varies depending upon the causes of degradation and the substrate stabilized. In general, it is difficult to predict which stabilizer will be most effective and most economical for any one area of application. For example, stabilizer effectiveness in reducing volatility may depend upon preventing bond scission in the substrate molecule. Limiting embrittlement and retaining elasticity in a polymer or rubber may require prevention of excessive crosslinking and/or chain scission. Prevention of discoloration may require inhibiting reactions which yield new chromophores or color bodies in the substrate or stabilizer. Problems of process stability and incompatibility must also be considered.

Various organic hydroxylamine compounds are generally known and some are commercially available. A number of patients disclose nitrogen-substituted hydroxylamines as antioxidant stabilizers for various substrates including polyolefins, polyesters and polyurethanes. U.S. 3,432,578, 3,644,278, 3,778,464, 3,408,422, 3,926,909, 4,316,996, 4,386,224 and 4,590,231 are representative of such patents which basically disclose N,N-dialkyl-, N,N-diaryl and N,N-diaralky hydroxylamine compounds and their color improvement and color stabilizing activity.

N-hydroxyimino acids and esters thereof are well known in the literature and have been indicated as biologically active. For example, N-hydroxyiminodiacetic acid is a comercially available compound. Representative publications disclosing such compounds include Kneifel et al., J. Am. Chem. Soc. 108, 3075-3077 (1986) which describes the stereochemistry and synthesis of a vanadium complex of N-(L-1-carboxyethyl)-N-hydroxy-L-alanine; Felcman et al., Inorg. Chim. Acta 93, 101-108 (1984) which describes the synthesis and stability of several transition metal complexes of N-hydroxyiminodiacetic acid and the corresponding iminodipropionic acid; Becke et al., Ber. 98 1322-1324 (1965) which specifically discloses the diethyl hydroxyiminodipropionate; Baldwin et al., Tetrahedron 40, 4363-4370 (1984) which describes the corresponding dimethyl hydroxyiminodipropionate; Japan Kokai 58-120,250 (1983) which describes a silver halide color developing solution containing a pyrrolidone polymer and hydroxyiminodiacetic acid; and, somewhat related, U.S. 3,933,946 which discloses herbicidal N-hydroxy-N-phosphonomethylglycinates. Polymer stabilization utility for these compounds is not mentioned.

Of particular interest is U.S. 3,644,278 which generically discloses di($C_1$-$C_{12}$)alkyl hydroxyiminodiacetates and propionates for use in stabilizing various organic materials.

The present invention relates to a composition comprising a polymer, resin, mineral fluid or synthetic fluid subject to oxidative, thermal and actinic degradation and at least a compound of formula (I)

$$R_1O-\overset{O}{\overset{\|}{C}}-(CH_2)_n-\overset{OH}{\overset{|}{N}}-(CH_2)_n-\overset{O}{\overset{\|}{C}}-OR_2 \qquad (I)$$

wherein $R_1$ and $R_2$ are independently hydrogen, alkyl of 4,8 or 14 to 36 carbon atoms, cycloalkyl of 5 to 12 carbon atoms, phenyl, phenyl substituted by alkyl of 1 to 12 carbon atoms, aralkyl of 7 to 9 carbon atoms or said aralkyl substituted by alkyl of 1 to 12 carbon atoms and n is 1 or 2.

The compositions of this invention exhibit a variety of desirable properties stemming from the presence therein of the indicated N-hydroxyimino acids and esters. Thus, the compounds serve to protect various substrates such as polyolefins, elastomers and lubricating oils against the adverse effects of oxidative and thermal degradation. They are most effective as lubricant stabilizers and as color improvers and process stabilizers in polyolefin compositions containing hindered amine light stabilizers or combinations of phenolic antioxidants and organic phosphites. In addition, the gas fading that may be experienced upon exposure to the combustion products of natural gas is also significantly reduced.

Preferred compositions are those, wherein $R_1$ and $R_2$ are independently hydrogen, straight-chain or branched alkyl of 4,8 or 14 to 18 carbon atoms, cyclopentyl, cyclohexyl, benzyl, α-methylbenzyl or α,α-dimethylbenzyl.

Particular preferred examples of compounds of formula (I) are N,N-bis[tert-butoxycarbonylmethyl]hydroxylamine, N,N-bis[octadecyloxycarbonylmethyl]hydroxylamine, di(2-ethylhexyl)-β,β'-hydroxyiminodipropionate and dioctyl-β,β'-hydroxyiminodipropionate.

$R_1$ and $R_2$ as straight-chain or branched alkyl of 4,8 and 14 to 36 carbon atoms are for example n-butyl, tert-butyl, n-octyl, 2-ethylhexyl, n-tetradecyl, n-pentadecyl, n-octadecyl, eicosyl, tetracosyl, triacontyl or hexatriacontyl. Alkyl of 4,8 and 14 to 18 carbon atoms is preferred.

Examples of $R_1$ and $R_2$ as cycloalkyl of 5 to 12 carbon atoms are cyclopentyl, cyclohexyl, cyclooctyl and cyclododecyl. Cycloalkyl of 5 to 8 carbon atoms is preferred. Cyclopentyl and cyclohexyl are especially preferred.

$R_1$ and $R_2$ as phenyl substituted by alkyl of 1 to 12 carbon atoms may be e.g. 3- or 4-methylphenyl, 3,5-dimethylphenyl or 4-nonylphenyl.

$R_1$ and $R_2$ as aralkyl of 7 to 9 carbon atoms or said aralkyl being substituted by alkyl of 1 to 12 carbon atoms may be in particular phenylalkyl of 7 to 9 carbon atoms where the phenyl ring is optionally substituted by alkyl of 1 to 12 carbon atoms, preferably by methyl. Examples are benzyl, α-methylbenzyl, α,α-dimethylbenzyl, 3-or 4-methylbenzyl, 3,5-dimethylbenzyl and 4-nonylbenzyl. Benzyl, α-methylbenzyl and α,α-dimethylbenzyl are preferred.

The compounds of formula (I) can be prepared by methods known per se, e.g. by reacting a compound of formula (II)

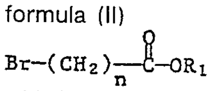 (II)

with hydroxylamine hydrochloride or a compound of the formula (III),

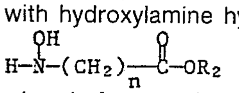 (III)

when in formula (I) $R_1$ and $R_2$ are different. The radicals $R_1$ and $R_2$ and n have the meanings given above.

Compounds of formula (I) wherein n is 2 can also be prepared by reacting the appropriately substituted acrylate with hydroxylamine hydrochloride or a hydroxylamine of the formula (III).

The reactions described above are preferably carried out in a solvent, e.g. dimethylformamide. The reactions are conveniently conducted in the presence of an acid acceptor, e.g. anhydrous sodium carbonate, and at a temperature ranging from 25 to 100°C, preferably room temperature.

The reactants in this approach are commercially available or can be prepared by known methods. For example, the above noted compound of formula (II) can be prepared by reacting

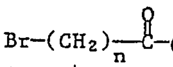 with an alcohol $R_1OH$ in a solvent, e.g. methylene chloride, and in the presence of a proton acceptor, e.g. a tertiary amine like triethylamine or pyridine, at a temperature ranging from 0 to 40°C.

The compounds of formula (I) are effective in stabilizing mineral and synthetic fluids, for example lubricating oils, circulating oils, etc.

The compounds of formula (I) are also effective in stabilizing synthetic polymers, in particular polyolefin homopolymers or copolymers.

Substrates in which the compounds of formula (I) are particularly useful are polyolefins such as polyethylene and polypropylene, polystyrene, including impact polystyrene, ABS resin, SBR, isoprene, as well as natural rubber, polyesters including polyethylene terephthalate and polybutylene terephthalate, including copolymers and lubricating oils such as those derived from mineral oils.

In general polymers which can be stabilized include

1. Polymers of monoolefins and diolefins, for example polypropylene, polyisobutylene, polybutene-1, polymethylpentene-1, polyisoprene or polybutadiene, as well as polymers of cycloolefins, for instance of cyclopentene or norbornene, polyethylene (which optioanlly can be crosslinked), for example high density polyethylene (HDPE), low density polyethylene (LDPE and linear low density polyethylene (LLDPE).

2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).

3. Copolymers of monoolefines and diolefines with each other or with other vinyl monomers, such as, for example, ethylene/propylene, linear low density polyethylene (LLDPE) and its mixtures with low density polyethylene (LDPE), propylene/butene-1, ethylene/hexene, ethylene/ethylpentene, ethylene-heptene, ethylene/octene, propylene/isobutylene, ethylene/butene-1, propylene/butadiene, isobutylene/isoprene, ethylene/alkyl acrylates, ethylene/alkyl methacrylates, ethylene/vinyl acetate or ethylene/acrylic acid copolymers and their salts (ionomers) and terpolymers of ethylene with propylene and a diene, such as hexadiene, dicyclopentadiene or ethylidene-norbornene; as well as mixtures of such copolymers and their mixtures with polymers mentioned in 1) above, for example polypropylene/ethylene-propylene-copolymers, LDPE/EVA, LDPE/EAA, LLDPE/EVA and LLDPE/EAA.

3a. Hydrocarbon resins (for example $C_5$-$C_9$) and hydrogenated modifcations thereof (for example tackyfiers).

4. Polystyrene, poly-(p-methylstyrene), poly-(α-methylstyrene).

5. Copolymers of styrene or α-methylstyrene with dienes or acrylic derivatives, such as, for example, styrene/butadiene, styrene/acrylonitrile, styrene/alkyl methacrylate, styrene/maleic anhydride, styrene/butadiene/ethyl acrylate, styrene/acrylonitrile/methyl acrylate; mixtures of high impact strength from styrene copolymers and another polymer, such as, for example, from a polyacrylate, a diene polymer or an ethylene/propylene/diene terpolymer; and block copolymers of styrene, such as, for example, styrene/butadiene/styrene, styrene/ isoprene/styrene, styrene/ethylene/butylene/styrene or styrene/ethylene/propylene/styrene.

6. Graft copolymers of styrene of α-methylstyrene such as, for example, styrene on polybutadiene, styrene on polybutadiene-styrene or polybutadiene-acrylonitrile; styrene and acrylonitrile (or methacrylonitrile) on polybutadiene; styrene and maleic anhydride or maleimide on polybutadiene; styrene, acrylonitrile and maleic anhydride or maleimide on polybutadiene; styrene, acrylonitrile and methyl methacrylate on polybutadiene, styrene and alkyl acrylates or methacrylates on polybutadiene, styrene and acrylonitrile on ethylene/propylene/diene terpolymers, styrene and acrylonitrile on polyacrylates or

polymethacrylates, styrene and acrylonitrile on acrylate/butadiene copolymers, as well as mixtures thereof with the copolymers listed under 5), for instance the copolymer mixtures known as ABS-, MBS-, ASA- or AES-polymers.

7. Halogen-containing polymers, such as polychloroprene, chlorinated rubbers, chlorinated or sulfochlorinated polyethylene, epichlorohydrine homo- and copolymers, polymers from halogen-containing vinyl compounds,as for example, polyvinylchloride, polyvinylidene chloride, polyvinyl fluoride, polyvinylidene fluoride, as well as copolymers thereof, as for example, vinyl chloride/vinylidene chloride, vinyl chloride/vinyl acetate or vinylidene chloride/vinyl acetate copolymers.

8. Polymers which are derived from α,β-unsaturated acids and derivatives thereof, such as polyacrylates and polymethacrylates, polyacrylamide and polyacrylonitrile.

9. Copolymers from the monomers mentioned under 8) with each other or with other unsaturated monomers, such as, for instance, acrylonitrile/butadien, acrylonitrile/alkyl acrylate, acrylonitrile/alkoxyalkyl acrylate or acrylonitrile/vinyl halogenide copolymers or acrylonitrile/alkyl methacrylate/butadiene terpolymers.

10. Polymers which are derived from unsaturated alcohols and amines, or acyl derivatives thereof or acetals thereof, such as polyvinyl alcohol, polyvinyl acetate, polyvinyl stearate, polyvinyl benzoate, polyvinyl maleate, polyvinylbutyral, polyallyl phthalate or polyallyl-melamine; as well as their copolymers with olefins mentioned in 1) above.

11. Homopolymers and copolymers of cyclic ethers, such as polyalkylene glycols, polyethylene oxide, polypropylene oxide or copolymers thereof with bis-glycidyl ethers.

12. Polyacetals, such as polyoxymethylene and those polyoxymethylene which contain ethylene oxide as a comonomer; polyacetals modified with thermoplastic polyurethanes, acrylates or MBS.

13. Polyphenylene oxides and sulfides, and mixtures of polyphenylene oxides with polystyrene or polyamides.

14. Polyurethanes which are derived from polyethers, polyesters or polybutadiens with terminal hydroxyl groups on the one side and aliphatic or aromatic polyisocyanates on the other side, as well as precursors thereof (polyisocyanates, polyols or prepolymers).

15. Polyamides and copolyamides which are derived from diamines and dicarboxylic acids and/or from aminocarboxylic acids or the corresponding lactams, such as polyamide 4, polyamide 6, polyamide 6/6, 6/10, 6/9, 6/12 and 4/6, polyamide 11, polyamide 12, aromatic polyamides obtained by condensation of m-xylene, diamine and adipic acid; polyamides prepared from hexamethylene diamine and isophthalic or/and terephthalic acid and optionally an elastomer as modifier, for example poly-2,4,4,-trimethylhexamethylene terephthalamide or poly-m-phenylene isophthalamide. Further copolymers of the aforementioned polyamides with polyolefins, olefin copolymers, ionomers or chemically bonded or grafted elastomers; or with polyethers, such as for instance, with polyethylene glycol, polypropylene glycol or polytetramethylene glycols. Polyamides or copolyamides modified with EPDM or ABS. Polyamides condensed during processing (RIM-polyamide systems).

16. Polyureas, polyimides and polyamide-imides.

17. Polyesters which are derived from dicarboxylic acids and diols and/or from hydroxycarboxylic acids or the corresponding lactones, such as polyethylene terephthalate, polybutylene terephthalate, poly-1,4-dimethylol-cyclohexane terephthalate, poly-[2,2,-(4-hydroxyphenyl)-propane] terephthalate and polyhydroxybenzoates as well as block-copolyether-esters derived from polyethers having hydroxyl end groups.

18. Polycarbonates and polyester-carbonates.

19. Polysulfones, polyethersulfones and polyetherketones.

20. Crosslinked polymers which are derived from aldehydes on the one hand and phenols, ureas and melamines on the other hand, such as phenol/formaldehyde resins, urea/formaldehyde resins and melamine/formaldehyde reins.

21. Drying and non-drying alkyd resins.

22. Unsaturated polyester resins which are derived from copolyesters of saturated and unsaturated dicarboxylic acids with polyhydric alcohols and vinyl compounds as crosslinking agents, and also halogen-containing modifications thereof of low inflammability.

23. Thermosetting acrylic resins, derived from substituted acrylic esters, such as epoxy-acrylates, urethane-acrylates or polyester-acrylates.

24. Alkyd resins, polyester resins or acrylate resins in admixture with melamine resins, urea resins, polyisocyanates or epoxide resins as crosslinking agents.

25. Crosslinked epoxide resins which are derived from polyepoxides, for example from bis-glycidyl ethers or from cycloaliphatic di-epoxides.

26. Natural polymers, such as cellulose, rubber, gelatine and derivatives thereof which are chemically modified in a polymerhomologous manner, such as cellulose acetates, cellulose propionates and cellulose butyrates, or the cellulose ethers, such as methylcellulose; rosins and their derivatives.

27. Mixtures of polymers as mentioned above, for example PP/EPDM, Polyamide 6/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPE/HIPS, PPE/PA 6.6 and copolymers, PA/HDPE, PA/PP, PA/PPE.

28. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellithates) and also mixtures of synthetic esters with mineral oils in any weight ratios, which materials may be used as plasticizer for polymers or as textile spinning oils, as well as aqueous emulsions of such materials.

29. Aqueous emulsins of natural or synthetic rubber, e.g. natural latex or latices of carboxylated styrene/butadiene copolymers.

In general, the compounds of formula (I) are employed in from about 0.01 to about 5 % by weight of the stabilized composition, although this will vary with the particular substrate and application. An advantageous range is from about 0.5 to about 2 %, and especially 0.1 to about 1 %.

The stabilizers of formula (I) may readily be incorporated into the material to be stabilized by conventional techniques, at any convenient stage prior to the manufacture of shaped articles therefrom. For example, the stabilizer may be fixed with the material to be stabilized in dry powder form, or a suspension or emulsion of the stabilizer may be mixed with a solution, suspension, or emulsion of the material to be stabilized. The resulting stabilized compositions of the invention may optionally also contain various conventional additives, such as the following:

1. Antioxidants

1.1. Alkylated monophenols, for example 2,6-di-tert-butyl-4-methylphenol, 2-tert-butyl-4,6-dimethylphenol, 2,6-di-tert-butyl-4-ethyl phenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol.

1.2. Akylated hydroquinones,for example 2,6-di-tert-butyl-4-methoxyphenol, 2,5-di-tert-butylhydroquinone, 2,5-di-tert-amylhydroquinone, 2,6-diphenyl-4-octadecyloxyphenol.

1.3. Hydroxylated thiodiphenyl ethers, for example 2,2′-thiobis(6-tert-butyl-4-methylphenol), 2,2′-thiobis(4-octylphenol), 4,4′-thiobis(6-tert-butyl-3-methylphenol), 4,4′-thiobis(6-tert-butyl-2-methylphenol.

1.4. Alkylidenebisphenols, for example 2,2′-methylenebis(6-tert-butyl-4-methylphenol), 2,2′-methylenebis(6-tert-butyl-4-ethylphenol), 2,2′-methylenebis[4-methyl-6-(α-methylcyclohexyl)phenol], 2,2′-methylenebis(4-methyl-6-cyclohexylphenol), 2,2′-methylenebis-(6-nonyl-4-methylphenol), 2,2′-methylenebis(4,6-di-tert-butylphenol), 2,2′-ethylidenebis(4,6-di-tert-butylphenol), 2,2′-ethylidenebis(6-tert-butyl-4-isobutylphenol), 2,2′-methylenebis[6-(α-methylbenzyl)-4-nonylphenol], 2,2′-methylenebis[6-(α,α-dimethylbenzyl)-4-nonylphenol], 4,4′-methylenebis(2,6-di-tert-butylphenol), 4,4′-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis-[3,3-bis(3′-tert-butyl-4′-hydroxyphenyl)butyrate], bis(3-tert-butyl-4-hydroxy-5-methylphenyl)dicyclopentadiene, bis[2-(3′-tert-butyl-2′-hydroxy-5′-methylbenzyl)-6-tert-butyl-4methylphenyl] terephthalate.

1.5. Benzyl compounds, for example 1,3,5-tris(3,5-di-tert-butyl-4-hydroxybenzyl)-2,4,6-trimethylbenzene, bis(3,5-di-tert-butyl-4-hydroxybenzyl) sulfide, isooctyl 3,5-di-tert-butyl-4-hydroxybenzylmercaptoacetate, bis(4-tert-butyl-3-hydroxy-2,6-dimethylbenzyl) dithiolterephthalate, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, dioctadecyl 3,5-di-tert-butyl-4-hydroxybenzylphosphonate, calcium salt of monoethyl 3,5-di-tert-butyl-4-hydroxybenzylphosphonate, 1,3,5-tris(3,5-dicyclohexyl-4-hydroxybenzyl)isocyanurate.

1.6. Acylaminophenols, for example anilide of 4-hydroxylauric acid, anilide of 4-hydroxystearic acid, 2,4-bis(octylmercapto)-6-(3,5-di-tert-butyl-4-hydroxyanilino)-s-triazine, octyl N-(3,5-di-tert-butyl-4-hydroxyphenyl)carbamate.

1.7. Esters of β-(3,5-di-tert-butyl-4-hydroxyphenyl)propionic acid with mono-, or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.8. Esters of β-(5-tert-butyl-4-hydroxy-3-methylphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.9. Esters of β-(3,5-dicyclohexyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.10. Amides of β-(3,5-di-tert-butyl-4-hydroxyphenyl)-propionic acid e.g. N,N′-bis(3,5-di-tert-butyl-4-hydroxyphenylpropionyl)hexamethylene-diamine, N,N′-bis(3,5-di-tert-butyl-4-hydroxyphenylpropionyl)trimethylene-diamine, N,N′-bis(3,5-di-tert-butyl-4-hydroxyphenylpropionyl)hydrazine.

2. UV absorbers and light stabilisers

2.1. 2-(2′-Hydroxyphenyl)benzotriazoles, for example the 5′-methyl, 3′,5′-di-tert-butyl, 5′-tert-butyl, 5′-(1,1,3,3-tetramethylbutyl), 5-chloro-3′,5-di-tert-butyl, 5-chloro-3′-tert-butyl-5′-methyl, 3′-sec-butyl-5′-tert-butyl, 4′-octoxy, 3′,5′-di-tert-amyl and 3′,5′-bis(α,α-dimethylbenzyl) derivatives.

2.2. 2-Hydroxybenzophenones, for example the 4-hydroxy, 4-methoxy, 4-octoxy, 4-decyloxy, 4-dodecyloxy,

4-benzyloxy, 4,2',4'-trihydroxy and 2'-hydroxy-4,4'-dimethoxy derivatives.

2.3. Esters of substituted and unsubstituted benzoic acids, for example, 4-tert-butylphenyl salicylate, phenyl salicylate, octylphenyl salicylate, dibenzoylresorcinol, bis(4-tert-butylbenzoyl)-resorcinol, benzoylresorcinol, 2,4-di-tert-butylphenyl 3,5-di-tert-butyl-4-hydroxybenzoate and hexadecyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxycinnamate, methyl α-carbomethoxy-p-methoxy-cinnamate and N-(β-carbomethoxy-β-cyanovinyl)-2-methylindoline.

2.5. Nickel compounds, for example nickel complexes of 2,2'-thio-bis[4-(1,1,3,3-tetramethylbutyl}phenol], such as the 1:1 or 1:2 complex, with or without additional ligands such as n-butylamine, triethanolamine or N-cyclohexyldiethanolamine, nickel dibutyldithiocarbamate, nickel salts of 4-hydroxy-3,5-di-tert-butylbenzylphosphonic acid monoalkyl esters, e.g. of the methyl or ethyl ester, nickel complexes of ketoximes, e.g. of 2-hydroxy-4-methylphenyl undecyl ketoneoxime, nickel complexes of 1-phenyl-4-lauroyl5-hydroxypyrazole, with or without additional ligands.

2.6. Sterically hindered amines, for example bis(2,2,6,6-tetra-methylpiperidyl) sebacate, bis(1,2,2,6,6-pentamethylpiperidyl) sebacate, bis(1,2,2,6,6-pentamethylpiperidyl) n-butyl-3,5-di-tert-butyl-4-hydroxybenzylmalonate, the condensation product of 1-hydroxyethyl-2,2,6,6-tetramethyl-4-hydroxypiperidine and succinic acid, the condensation product of N,N'-bis(2,2,6,6-tetramethyl-4-piperidyl)hexamethylenediamine and 4-tert-octylamino-2,6-dichloro1,3,5-s-triazine, tris(2,2,6,6-tetramethyl-4-piperidyl) nitrilotriacetate, tetrakis(2,2,6,6-tetramethyl-4-piperidyl)-1,2,3,4-butane tetracarboxylate, 1,1'-(1,2-ethanediyl)bis(3,3,5,5-tetramethyl-piperazinone).

2.7. Oxalic acid diamides, for example 4,4-dioctyloxyoxanilide, 2,2'-dioctyloxy-5,5-di-tert-butyloxanilide, 2,2'-didodecyloxy-5,5'-di-tert-butyloxanilide, 2-ethoxy-2'-ethyloxanilide, N,N'-bis(3-dimethylaminopropyl)oxalamide, 2-ethoxy-5-tert-butyl-2'-ethyloxanilide and its mixture with 2-ethoxy-2'-ethyl-5,4'-di-tert-butyloxanilide and mixtures of ortho- and para-methoxy-disubstituted oxanilides and mixtures of o- and p-ethoxy-disubstituted oxanilides.

3. Metal deactivators, for example N,N'-diphenyloxalic acid diamide N-salicylal-N'-salicyloylhydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalic acid dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, tristearyl sorbitol triphosphite, tetrakis(2,4-di-tert-butylphenyl) 4,4'-biphenylene diphosphonite, 3,9-bis(2,4-di-tert-butylphenoxy)-2,4,8,10-tetraoxa-3,9-diphosphaspiro[5.5]undecane.

5. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

6. Polyamide stabilisers, for example, copper salts in combination with iodides and/or phosphorus compounds and salts of divalent manganese.

7. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.

8. Nucleating agents, for example, 4-tert-butyl-benzoic acid, adipic acid, diphenylacetic acid.

9. Fillers and reinforcing agents, for example, calcium carbonate, silicates, glass fibres, asbestos, talc, kaolin, mica, barium sulfate, metal oxides and hydroxydes, carbon black, graphite.

10. Other additives, for example, plasticisers, lubricants, emulsifiers, pigments, optical brighteners, flameproofing agents, antistatic agents and blowing agents.

The compositions of the invention preferably contain a phenolic antioxidant as further additive.

While the compounds of formula (I) can be beneficially used as stabilizers for a variety of substrates, particularly the polyolefins, both alone and in conjunction with other coadditives, the introduction of the compounds of formula (I) into polyolefins, optionally containing various alkali metal, alkaline earth metal and aluminum salts of higher fatty acids (see Additive #7 hereinabove), with hindered phenolic antioxidants results in enhanced and particularly salubrious protection to such substrates in terms of reducing color formation stemming from the presence of the phenols. Such phenolic antioxidants include n-octadecyl 3,5-di-tert-butyl-4-hydroxyhydrocinnamate, neopentanetetrayl tetrakis (3,5-di-tert-butyl-4-hydroxyhydrocinnamate), di-n-octadecyl 3,5-di-tert-butyl-4-hydroxybenzyl-phosphonate, 1,3,5-tris(3,5-di-tert-butyl-4-hydroxybenzyl)isocyanurate. thiodiethylene bis(3,5-di-tert-butyl-4-hydroxyhydrocinnamate), 1,3,5-trimethyl-2,4,6-tris(3,5-di-tert- butyl-4-hydroxybenzyl)benzene, 3,6-dioxaoctamethylene bis(3-methyl-5-tert-butyl-4-hydroxyhydrocinnamate). 2,6-di-tert-butyl-p-cresol, 2,2'-ethylidene-bis(4,6-di-tert-butylphenol), 1,3,5-tris(2,6-dimethyl-4-tert-butyl-3-hydroxybenzyl)isocyanurate, 1,1,3-tris(2-methyl-4-hydroxy-5-tert-butylphenyl)butane, 1,3,5-tris[2-(3,5-di-tert-butyl-4-hydroxyhydrocinnamoyloxy)ethyl]isocyanurate, 3,5-bis(3,5-di-tert-butyl-4-hydroxybenzyl)mesitol. hexamethylene bis(3,5-di-tert-butyl-4-hydroxyhydrocinnamate), 1-(3,5-di-tert-butyl-4-hydroxyanilino)-3,5-bis(octylthio)-s-triazine, N,N'-hexamethylene-bis(3,5-di-tert-butyl-4-hydroxyhydrocinnamamide), calcium bis(ethyl-3,5-di-tert-butyl-4-hydroxybenzylphosphonate), ethylene bis[3,3-bis(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, and N,N'-bis[2-(3,5-di-tert-butyl-4-hydroxyhydrocinnamoyloxy)ethyl]oxamide.

Preferred antioxidants are neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol and 2,2'-ethylidene-bis(4,6-di-tert-butylphenol).

The following examples illustrate the embodiments of this invention. In these examples, all parts given are by weight unless otherwise specified.

Example 1: Preparation of N,N-Bis[tert-butoxycarbonylmethyl]-hydroxylamine

A solution of 20.00 grams of tert-butyl bromoacetate and 3,47 grams of hydroxylamine hydrochloride in 100 ml of dimethylformamide containing 21.2 grams of suspended sodium carbonate is stirred at room temperature for 3 hours. The reaction mixture is concentrated and the residue is recrystallized from heptane to give the title compound as a white solid, m.p. 73-76°C.

Anal. Calcd. for $C_{12}H_{23}NO_5$: C, 55.2; H, 8.9; N, 5.4
Found: C, 55.1; H, 9.2; N, 5.4.

Example 2: Preparation of N,N-Bis[octadecyloxycarbonylmethyl]-hydroxylamine

Bromoacetylchloride (52.11 grams) is added dropwise into a stirred solution of 89.27 grams of octadecanol and 50 ml of triethylamine in 400 ml of methylene chloride at 25-30°C. After stirring the reaction mixture at room temperature overnight under $N_2$, the mixture is filtered and the filtrate is concentrated under reduced pressure. Purification by liquid chromatography affords octadecyl bromoacetate as a white solid m.p. 37-40°C.

A mixture of 6.96 grams of octadecyl bromoacetate, 0.62 grams of hydroxylamine hydrochloride and 3.77 grams of sodium carbonate in 100 ml of dimethylformamide is stirred at room temperature for 48 hours. The reaction mixture is concentrated under reduced pressure and the residue is purified by liquid chromatography to afford the title compound as a white solid, m.p. 69-71°C.

Anal. Calcd. for $C_{40}H_{79}NO_5$: C, 73.5; H, 12.8; N, 2.1
Found: C, 73.8; H, 12.4; N, 1.9.

Example 3: Preparation of Di(2-ethylhexyl-β,β'-hydroxyiminodipropionate

To a stirred mixture of 2.70 grams of sodium methoxide in 50 ml of methanol is added a solution of 4.0 grams of hydroxylamine hydrochloride in 100 ml of methanol at 0-5°C, followed by a solution of 18.47 grams of 2-ethylhexyl acrylate in methanol. After stirring the mixture at room temperature for 12 hours, the solvent is removed under reduced pressure. Purification by flash chromatography affords the title compound as a colorless oil.

Anal. Calcd. for $C_{22}H_{43}NO_5$: C, 65.8; H, 10.8; N, 3.5
Found: C, 65.8; H, 11.0; N, 3.4.

Example 4: Preparation of Dioctyl-β,β'-hydroxyiminodipropionate

The procedure of Example 3 is repeated using 2.70 grams of sodium methoxide, 4.0 grams of hydroxylamine hydrochloride, and 18.43 grams of octylacrylate in methanol, to afford the title compound as an oil.

Anal. Calcd. for $C_{22}H_{43}NO_5$: C, 65.8; H, 10.8; N, 3.5
Found: C, 66.2; H, 10.9; N, 3.4.

Example 5: Light Stability of Polypropylene

Unstabilized polypropylene powder (®Hercules Profax 6501) is thoroughly blended with the indicated amount of additive. The blended materials are then milled on a two roll mill at 182°C for five minutes, after which time the stabilized polypropylene is sheeted from the mill and allowed to cool. The milled polypropylene is then cut into pieces and compression molded on a hydraulic press at 220°C and $1.2 \times 10^6$ Pa into 0.127 mm thick plaques. The sample is exposed in a fluorescent sunlight/black light chamber (FS/BL) until failure. Failure is taken as the hours required to reach 0.5 carbonyl absorbance by infrared spectroscopy on the exposed films.

| Additive | FS/BL Test Results (Hours to Failure) |
|---|---|
| Base resin | 220 |
| 0.2 % Compound of Example 1 | 320 |
| 0.2 % Compound of Example 2 | 320 |

Example 6: Processing of Polypropylene

Base Formulation
Polypropylene* 100 parts
Calcium stearate 0.10 parts
*®Profax 6501 from Himont USA

The indicated stabilizers are solvent blended into polypropylene as solutions in methylene chloride and after removal of solvent by evaporation at reduced pressure, the resin is extruded using the following extruder conditions:

| | | Temp. (°C) |
|---|---|---|
| Cylinder #1 | | 232 |
| Cylinder #2 | | 246 |
| Cylinder #3 | | 260 |
| Gate #1 | | 260 |
| Gate #2 | | 260 |
| Gate #3 | | 260 |
| RPM | 100 | |

During extrusion, the internal extruder pressure is determined using a pressure transducer. The melt flow rate (MFR) is determined by ASTM method 1238 condition L. The melt flow rate varies inversely as the transducer pressure and both are a measure of the molecular weight for a specific type of polymer. Higher values mean lower molecular weight and indicate decomposition of the polymer. The results are shown in the following table.

| Additives | MFR After Extrusion (g/10 min) | |
|---|---|---|
| | 1 | 5 |
| Base resin | 6.3 | 14.9 |
| 0.1 % Antioxidant A | 3.4 | 6.9 |
| 0.1 % Antioxidant A + 0.05 % compound of Ex. 1 | 2.9 | 4.8 |
| 0.1 % Antioxidant A + 0.05 % compound of Ex. 2 | 3.5 | 5.0 |

Antioxidant A: Neopentyltetrakis [3-(3',5'-di-tert-butyl-4'-hydroxyphenyl)propanoate]

Example 7: Engine Oil Thin Film Oxygen Uptake Test

This test is conducted in the standard rotary bomb apparatus (decribed in ASTM D-2272) with modifications in procedure as described in the Preprint No. 82 CC-10-1 presented at the Conference of the American Society of Lubrication Engineers, October 5-7, 1982.

A 1.5 gram test sample of 150 N paraffinic mineral oil containing enough zinc dialkyldithiophosphate (ZDTP) to give 0.1 % by weight of zinc and 0.5 % by weight of the test compound is placed in the test apparatus. A catalyst package comprising 0.075 grams of oxidized fuel components, 0.075 grams of soluble metal catalyst* and 0.030 grams of water are added. The temperature is set at 160° C and the initial oxygen pressure is 6.2 bar. Failure is taken as the time in minutes for a pressure drop of 1.72 bar to be observed. The test results are given below.

| Additive | Failure Time (min) |
|---|---|
| Base oil | 90-100 |
| Compound of Example 3 | 116 |
| Compound of Example 4 | 135 |

These data indicate the instant compounds to be effective stabilizers in oil.

* The soluble metal catalysts are a mixture of the following metal naphthenates in the weight ratios given below: cupric 0.69%, ferric 0.41 %, lead 8.0 %, manganese 0.35 %, stannous 0.36 % (as naphthenates).

**Claims**

1. A composition of matter comprising a polymer, resin, mineral fluid or synthetic fluid subject to oxidative, thermal and actinic degradation and at least one compound of formula (I)

$$R_1O-\overset{O}{\overset{\|}{C}}-(CH_2)_n-\overset{OH}{\overset{|}{N}}-(CH_2)_n-\overset{O}{\overset{\|}{C}}-OR_2 \qquad (I)$$

wherein $R_1$ and $R_2$ are independently hydrogen, alkyl of 4,8 or 14 to 36 carbon atoms, cycloalkyl of 5 to 12 carbon atoms, phenyl, phenyl substituted by alkyl of 1 to 12 carbon atoms, aralkyl of 7 to 9 carbon atoms or said aralkyl substituted by alkyl of 1 to 12 carbon atoms; and n is 1 or 2,

2. The composition of claim 1, wherein $R_1$ and $R_2$ are independently hydrogen, straight-chain or branched alkyl of 4,8 or 14 to 18 carbon atoms, cyclopentyl, cyclohexyl, benzyl, α-methylbenzyl or α,α-di-methylbenzyl.

3. The composition of claim 2, wherein said compound of formula (I) is N,N-bis[tert-butoxycarbonylmethyl]hydroxylamine, N,N-bis[octadecyloxycarbonylmethyl]hydroxylamine, di(2-ethylhexyl)-β,β'-hydrox-

yiminodipropionate or dioctyl-β,β′-hydroxyiminodipropionate.

4. The composition of claim 1 comprising a stabilized synthetic polymer.

5. The composition of claim 4, wherein said synthetic polymer is a polyolefin homopolymer or copolymer.

6. The composition of claim 1 which also contains a phenolic antioxidant.

7. The composition of claim 6, wherein said phenolic antioxidant is selected from the group consisting of n-octadecyl 3,5-di-tert-butyl-4-hydroxyhydrocinnamate, neopentanetetrayl tetrakis (3,5-di-tert-butyl-4-hydroxyhydrocinnamate), di-n-octadecyl 3,5-di-tert-butyl-4-hydroxybenzyl-phosphonate, 1,3,5-tris(3,5-di-tert-butyl-4-hydroxybenzyl)isocyanurate, thiodiethylene bis(3,5-di-tert-butyl-4-hydroxyhydrocinnamate), 1,3,5-trimethyl-2,4,6-tris(3,5-di-tert-butyl-4-hydroxybenzyl)benzene, 3,6-dioxaoctamethylene bis(3-methyl-5-tert-butyl-4-hydroxyhydrocinnamate), 2,6-di-tert-butyl-p-cresol, 2,2′-ethylidene-bis(4,6-di-tert-butylphenol), 1,3,5-tris(2,6-di-methyl-4-tert-butyl-3-hydroxybenzyl)isocyanurate, 1,1,3-tris(2-methyl-4-hydroxy-5-tert-butylphenyl)butane, 1,3,5-tris[2-(3,5-di-tert-butyl-4-hydroxyhydrocinnamoyloxy)ethyl]isocyanurate, 3,5-bis-(3,5-di-tert-butyl-4-hydroxybenzyl)mesitol, hexamethylene bis(3,5-di-tert-butyl-4-hydroxyhydrocinnamate), 1-(3,5-di-tert-butyl-4-hydroxyanilino)-3,5-bis(octylthio)-s-triazine, N,N′-hexamethylene-bis(3,5-di-tert-butyl-4-hydroxyhydrocinnamamide), calcium bis-(ethyl-3,5-di-tert-butyl-4-hydroxybenzylphosphonate), ethylene bis[3,3-bis(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, and N,N′-bis[2-(3,5-di-tert-butyl-4-hydroxyhydrocinnamoyloxy)ethyl]oxamide.

8. The composition of claim 7, wherein said phenolic antioxidant is neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)-benzene, 1,3,5-tris(3,5-di-tert-butyl-4-hydroxybenzyl)isocyanurate, 2,5-di-tert-butyl-p-cresol and 2,2′-ethylidene-bis(4,6-di-tert-butylphenol).

9. The composition of claim 1 comprising a mineral or synthetic fluid.

10. Use of compounds according to claim 1 for stabilizing a polymer, resin, mineral fluid or synthetic fluid against oxidative, thermal and actinic degradation.